# EUROPÄISCHE PATENTANMELDUNG

(11) **EP 4 717 116 A1**
(43) Veröffentlichungstag der Anmeldung: **01.04.2026**
(21) Anmeldenummer: 25204903.6
(22) Anmeldetag: 26.09.2025
(51) Int. Cl.: A45C 11/20, A45C 13/00, A45C 13/10, A47J 47/02, B65D 45/18, B65D 45/16

(54) **DOSE, INSBESONDERE ZUR AUFBEWAHRUNG VON LEBENSMITTELN**

(30) Priorität: 27.09.2024 DE 102024128058
(71) Anmelder: RÖSLE GROUP GmbH, 87616 Marktoberdorf (DE)
(72) Erfinder: Schindler, Christoph, A-6973 Höchst (AT); Chu, Guiquan, 86163 Augsburg (DE)
(74) Vertreter: Dr. Weitzel & Partner

(57) **Zusammenfassung**

Die Erfindung betrifft eine Dose, insbesondere zur Aufbewahrung von Lebensmitteln, mit einem topfförmigen Grundkörper (1), der einen Innenraum (2) mit einer Zugriffsöffnung (3) umschließt;
mit einem auf den Grundkörper aufsetzbaren Deckel (4), der im aufgesetzten Zustand die Zugriffsöffnung verschließt und in einem abgehobenen Zustand die Zugriffsöffnung (3) freigibt, wobei der Deckel (4) mit Spannbügeln (5) im aufgesetzten Zustand am Grundkörper verriegelbar ist.

Die erfindungsgemäße Dose ist dadurch gekennzeichnet, dass der Deckel (4) eine umlaufende elastische Dichtung (6) zur Abdichtung gegen einen die Zugriffsöffnung umschließenden Rand (7) des Grundkörpers (1) aufweist, in welcher die Spannbügel (5) formschlüssig und herausnehmbar gehalten werden.

## Beschreibung

Die vorliegende Erfindung betrifft eine Dose, insbesondere zur Aufbewahrung von Lebensmitteln, gemäß dem Oberbegriff von Anspruch 1.

Dosen, wie sie die vorliegende Erfindung betrifft, werden zur Aufbewahrung und zum Transport von Lebensmitteln verwendet. Das beste Beispiel ist die sogenannte Butterbrotdose oder in Schwaben die sogenannte Vesperdose. Solche Dosen sind seit über 100 Jahren bekannt.

Gattungsgemäße Dosen weisen einen topfförmigen Grundkörper auf, der einen Innenraum umschließt. Selbstverständlich muss eine Zugriffsöffnung verbleiben, um die Lebensmittel in den Innenraum hineinlegen zu können und aus dem Innenraum herausnehmen zu können. Ein Deckel ist auf den Grundkörper aufsetzbar, um die Zugriffsöffnung wahlweise zu verschließen, sodass die Lebensmittel nicht aus der Dose herausfallen können, und freizugeben, sodass der Zugriff in den Innenraum gewährt wird.

Obwohl solche Dosen in zahlreichen verschiedenen Ausführungsformen bekannt sind, besteht ein fortwährender Bedarf den Gebrauch und die Möglichkeit einer leichten Reinigung der Dosen zu verbessern. Besonders sollen solche Dosen universell einsetzbar sein. Wenn herkömmlich beispielsweise der Deckel den Innenraum im aufgesetzten Zustand auf den Grundkörper flüssigkeitsdicht verschließen soll, so kommen Deckel mit Bügelverschlüssen zum Einsatz, wobei die Deckel dabei zudem häufig gelenkig am topfförmigen Grundkörper angeschlossen sind. Solche Bügelverschlüsse erschweren in der Praxis jedoch die Reinigung der Dose und können dann stören, wenn zeitweise gar kein flüssigkeitsdichter Verschluss erforderlich ist.

Wenn hingegen Dosen leicht geöffnet und geschlossen werden können sollen, so ist der Deckel in der Regel nicht flüssigkeitsdicht aufgesetzt und die Dose kann nicht zum sicheren Transport von Flüssigkeiten verwendet werden.

DD 213 185 A beschreibt einen Spannbügel für Konservengläser und dergleichen, mit welchem die Gläser flüssigkeitsdicht verschlossen werden können.

DD 227 666 A1 beschreibt einen Spannbügel, der in einem Deckel eingegossen ist, als Verschluss für Flaschen, Krüge und ähnliche Behältnisse.

AT 131072 A beschreibt einen Schinkenkocher oder Fleischformer von kreisrunder Form mit einem unter Federdruck stehenden Deckel und mit einem Spannbügel.

DD 2006 671 A offenbart eine Deckelsicherungsklammer, die eine Doppelfederwirkung mit erhöhter Klemmkraft bereitstellt.

DE 10 2012 109 559 A1 beschreibt einen Deckelverschluss für einen Behälter mit einem umlaufenden Rand, bei welchem Laschen mit einem Filmscharnier am Deckel angeschlossen sind oder einteilig mit dem Deckel im Spritzgussverfahren hergestellt werden. Der Deckel weist eine Dichtung auf, die gegen den Rand des Behälters gedrückt wird. Zum weiteren Stand der Technik wird verwiesen auf DE 6 926 916 U, DE 10 2010 060 694 A1 und DE 202 10 266 U1.

Die genannten Behältnisse zur Aufbewahrung von Lebensmitteln sind, wie leicht ersichtlich ist, nicht für den universellen Einsatz bestimmt und weisen die im Zusammenhang mit Spannbügeln genannten Nachteile auf.

Der vorliegenden Erfindung liegt die Aufgabe zugrunde eine Dose, insbesondere zur Aufbewahrung von Lebensmitteln, anzugeben, die besonders flexibel einsetzbar ist und die genannten Nachteile vermeidet. Insbesondere soll die Dose wahlweise flüssigkeitsdicht verschließbar sein und wahlweise nur reibschlüssig verschließbar sein, um ein leichtes Öffnen und Schließen zu ermöglichen.

Die erfindungsgemäße Aufgabe wird durch eine Dose mit den Merkmalen von Anspruch 1 gelöst. Die abhängigen Ansprüche beschreiben vorteilhafte und besonders zweckmäßige Ausgestaltungen der Erfindung.

Eine erfindungsgemäße Dose, insbesondere zur Aufbewahrung von Lebensmitteln, weist einen topfförmigen Grundkörper auf, der einen Innenraum mit einer Zugriffsöffnung umschließt. Ferner ist ein auf den Grundkörper aufsetzbarer Deckel vorgesehen, der im aufgesetzten Zustand die Zugriffsöffnung verschließt und in einem abgehobenen Zustand die Zugriffsöffnung freigibt. Der Deckel ist insbesondere im abgehobenen Zustand frei von jeglichem Anschluss an den Grundkörper, kann also vom Grundkörper abgenommen und weggelegt werden.

Der Deckel ist mit Spannbügeln im aufgesetzten Zustand am Grundkörper verriegelbar.

Erfindungsgemäß weist der Deckel eine umlaufende elastische Dichtung zur Abdichtung gegen einen die Zugriffsöffnung umschließenden Rand des Grundkörpers auf, wobei die Spannbügel in der elastischen Dichtung formschlüssig, aber herausnehmbar gehalten werden. So sind die Spannbügel bevorzugt in die elastische Dichtung eingeclipst.

Durch die Erfindung ist es möglich, die Dose beziehungsweise den Deckel wahlweise mit Spannbügeln zu versehen oder die Spannbügel zu entfernen. Damit wird die Dose besonders universell einsetzbar, je nach aktuellem Anwendungsbedarf.

Die elastische Dichtung kann, muss aber nicht, vollkommen flüssigkeitsdicht oder luftdicht sein. Beispielsweise kann eine produktionsbedingte oder gezielt eingebrachte Undichtigkeit das Verschließen der Dose durch Aufsetzen des Deckels erleichtern.

Bevorzugt werden die Spannbügel jeweils um eine erste Drehachse verdrehbar in der elastischen Dichtung gehalten. Beispielsweise erstrecken sich die Spannbügel jeweils von einem ersten axialen Ende zu einem zweiten axialen Ende und sind mit dem ersten axialen Ende um die erste Drehachse verdrehbar in der elastischen Dichtung eingesetzt.

An ihrem zweiten axialen Ende tragen die Spannbügel bevorzugt ein Konterelement und der Grundkörper weist an seinem Rand einen vom Innenraum weg gerichteten Vorsprung auf, der beispielsweise vollumfänglich um den Grundkörper entlang der Eingriffsöffnung verläuft. Im aufgesetzten und verriegelten Zustand des Deckels greift das Konterelement an dem Vorsprung an, derart, dass der Deckel mit der elastischen Dichtung gegen den Rand verspannt wird.

Der Vorsprung bildet bevorzugt eine nach unten offene Aussparung im Rand des Grundkörpers aus, in welche das Konterelement eingreift.

Gemäß einer vorteilhaften Ausführungsform umfassen die Spannbügel an ihrem ersten axialen Ende jeweils einen Steg, insbesondere mit einem kreisförmigen Querschnitt, der verdrehbar um die erste Drehachse in einer Nut in der elastischen Dichtung aufgenommen ist. Der Querschnitt kann selbstverständlich auch eine andere Form aufweisen, zum Beispiel eine elliptische Form oder eine runde Form mit einer oder mehreren Abflachungen. Die Nut weist bevorzugt einen Hinterschnitt auf, in dem der Steg verdrehbar und formschlüssig gehalten wird. Der Steg ist bevorzugt jeweils unter elastischer Verformung der elastischen Dichtung in die Nut einclipsbar und aus dieser herausnehmbar.

Bevorzugt umfasst die Nut eine vom Rand des Grundkörpers weg gerichtete Nutöffnung auf, über welche der Steg in die Nut einsetzbar und herausnehmbar ist. Damit kann der Steg durch Verspannen des Spannbügels gegen den Vorsprung des Grundkörpers in die Nut gezogen werden. Das Einclipsen erfolgt also beim Verschließen der Dose mit den Spannbügeln selbsttätig. Alternativ kann der Steg natürlich unabhängig von diesem Verspannvorgang in die Nut eingeclipst werden.

Bevorzugt weist die elastische Dichtung einen nach oben, das heißt weg vom Grundkörper gerichteten Dichtungsvorsprung auf, der die Nut radial außen begrenzt. Dieser Dichtungsvorsprung ragt bevorzugt gegenüber der die Nut begrenzendenden Oberfläche der elastischen Dichtung auf der anderen Seite der Nut, das heißt radial inneren Seite der Nut, vor. Dadurch kann der Steg zum Einclipsen in die Nut auf die Nut oder die Oberfläche der elastischen Dichtung neben und radial innerhalb der Nut aufgelegt werden und wird beim Schließen des jeweiligen Spannbügels in die Nut gezogen, wobei der Dichtungsvorsprung radial außerhalb der Nut den Steg gegen Verrutschen radial nach außen über die Nut hinaus blockiert.

Bevorzugt weisen die Spannbügel an ihrem zweiten axialen Ende jeweils einen Griff auf, der um eine zweite Drehachse verdrehbar ist, die parallel zur ersten Drehachse verläuft. Der Griff umfasst ein erstes axiales Griffende, das das Konterelement ausbildet, und ein zweites axiales Griffende, das sich im aufgesetzten und verriegelten Zustand des Deckels entlang des Grundkörpers in eine Richtung weg vom Rand erstreckt. Dabei erstreckt sich das zweite axiale Griffende bevorzugt in einem spitzen Winkel zum Grundkörper, sodass der Griff demnach einen Winkel aufweisen kann, damit das zweite axiale Griffende im verriegelten Zustand des Deckels leichter greifbar ist und vom Grundkörper weg gezogen werden kann, um den Deckel zu entriegeln.

Die zweite Drehachse ist bevorzugt zwischen dem ersten axialen Griffende und dem zweiten axialen Griffende positioniert, beispielsweise in der Nähe des Winkels zwischen den beiden axialen Griffenden. Insbesondere ist die zweite Drehachse zumindest im Wesentlichen in einer Mitte zwischen den beiden axialen Griffenden positioniert.

Der Spannbügel kann besonders vorteilhaft einen Draht umfassen, der zu einer Schlaufe gebogen ist, am ersten axialen Ende des Spannbügels den Steg ausbildet und am zweiten axialen Ende in den Griff gesteckt ist, sodass der Griff dort drehbar um die zweite Drehachse gehalten wird, sowie den Griff, der bevorzugt aus Kunststoff hergestellt ist. Insbesondere besteht der Spannbügel ausschließlich aus einem solchen Draht mit dem Griff.

Bevorzugt weist die elastische Dichtung eine Dichtlippe auf, mit welcher sie im aufgesetzten Zustand des Deckels radial von innen am Grundkörper dichtend angreift. Bei dieser Dichtung handelt es sich insbesondere um eine nicht flüssigkeitsdichte Dichtung, sondern bevorzugt um eine reibschlüssige Dichtung. Jedoch ist auch eine flüssigkeitsdichte Dichtung möglich. Besonders bevorzugt liegt der Deckel im aufgesetzten Zustand mit der elastischen Dichtung, insbesondere der genannten Dichtlippe, reibschlüssig am Grundkörper an und ist hingegen im verriegelten Zustand mit der elastischen Dichtung, beispielsweise einer dem Rand zugewandten unteren Auflagefläche der elastischen Dichtung, elastisch gegen den Grundkörper, bevorzugt flüssigkeitsdicht, verspannt.

Gemäß einer besonders nützlichen Ausgestaltung weist der Deckel einen starren Deckelkörper auf, an dessen äußeren Umfang die elastische Dichtung befestigt ist, beispielsweise stoffschlüssig. Insbesondere kann der Deckelkörper mit der elastischen Dichtung umspritzt sein. Der starre Deckelkörper besteht beispielsweise aus Glas, Holz oder Metall.

Die elastische Dichtung besteht bevorzugt aus Silikon oder einem anderen dauerelastischen Werkstoff.

Der Grundkörper ist bevorzugt ebenfalls aus einem starren Material hergestellt wie Glas, Holz oder Metall und ist insbesondere frei von einer elastischen Dichtung, zumindest an seinem Rand, an dem der Deckel mit der elastischen Dichtung anliegt.

Die elastische Dichtung weist bevorzugt eine radial innere Umfangsnut auf, in die der Deckelkörper eingesetzt ist.

Die Erfindung stellt eine nachhaltige Lösung zum Transportieren, Erwärmen und Aufbewahren von Lebensmitteln in einer Dose zur Verfügung. Bevorzugt kann die Dose in einem Baukastensystem zur Verfügung gestellt werden, in welchem ein Grundkörper oder verschiedene Grundkörper mit einem Deckel oder mit mehreren verschiedenen Deckeln kombiniert werden kann/können.

Als Metall kommt insbesondere Edelstahl in Betracht, für den starren Deckelkörper und/oder den Grundkörper.

Der Griff kann bevorzugt aus Kunststoff, insbesondere Hartplastik, hergestellt sein. Der Spannbügel ist bevorzugt im Übrigen aus einem Draht, insbesondere ebenfalls aus einem rostfreien Material, hergestellt.

Je nach Größe der Dose kommen zwei, drei oder vier abnehmbare Spannbügel in Betracht, wobei der Deckel beziehungsweise die elastische Dichtung bevorzugt eine entsprechende Anzahl von Nuten aufweist. Prinzipiell müssen jedoch nicht alle Nuten von einem Spanbügel besetzt sein und es kommt auch eine andere Anzahl von Spannbügeln in Betracht.

Die Erfindung soll nachfolgend anhand eines Ausführungsbeispiels und den Figuren exemplarisch beschrieben werden.

Es zeigen:
- Figur 1: eine erfindungsgemäße Dose in einer isometrischen Ansicht;
- Figur 2: eine vergrößerte Detaildarstellung im Bereich eines Spannbügels aus der Figur 1;
- Figur 3: einen Querschnitt durch die elastische Dichtung ohne Spannbügel;
- Figur 4: einen Querschnitt durch die elastische Dichtung mit eingesetztem Spannbügel;
- Figur 5: eine dreidimensionale Ansicht auf einen Axialschnitt durch eine erfindungsgemäße Dose;
- Figur 6: einen Axialschnitt durch die erfindungsgemäß ausgeführte Dose.

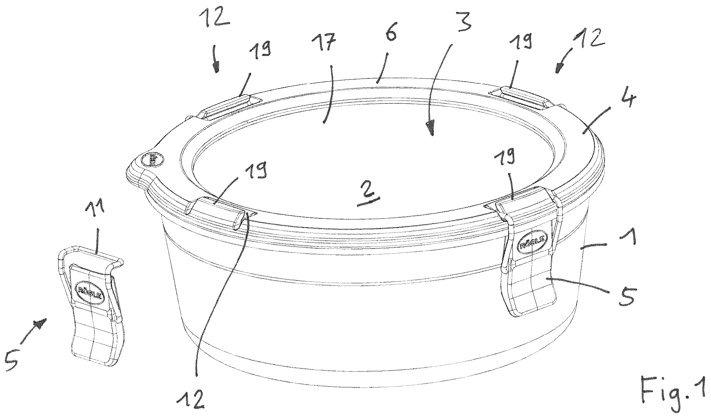

In der Figur 1 ist ein Ausführungsbeispiel einer erfindungsgemäßen Dose mit einem Grundkörper 1 und einem Deckel 4 gezeigt, der auf den Grundkörper 1 aufgesetzt ist, um die Zugriffsöffnung 3 zu dem Innenraum 2 im Grundkörper 1 zu verschließen. Demnach umschließen der Grundkörper 1 und der Deckel 4 gemeinsam den Innenraum 2 vollständig.

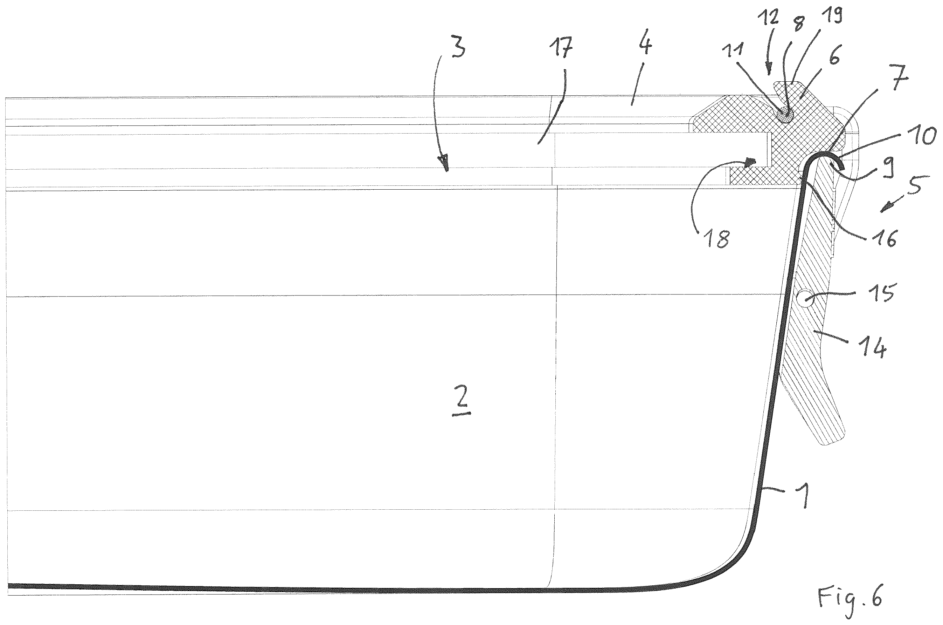

Der Deckel 4 weist einen Deckelkörper 17, beispielsweise aus Glas, auf, sowie eine den Deckelkörper 17 vollumfänglich umschließende elastische Dichtung 6. Mit der elastischen Dichtung 6 ist der Deckel 4 auf einen Rand 7 des Grundkörpers 1 aufgesetzt, wie sich besonders aus der Figur 6 ergibt.

Alle Figuren zeigen ein und dasselbe Ausführungsbeispiel der Erfindung. Die Erfindung kann jedoch auch abweichend von diesem Ausführungsbeispiel gestaltet sein.

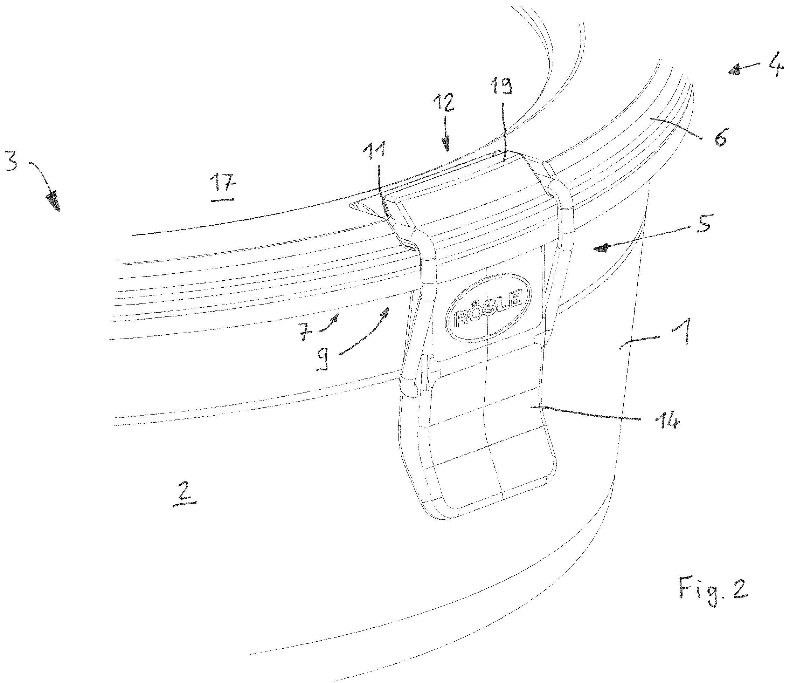

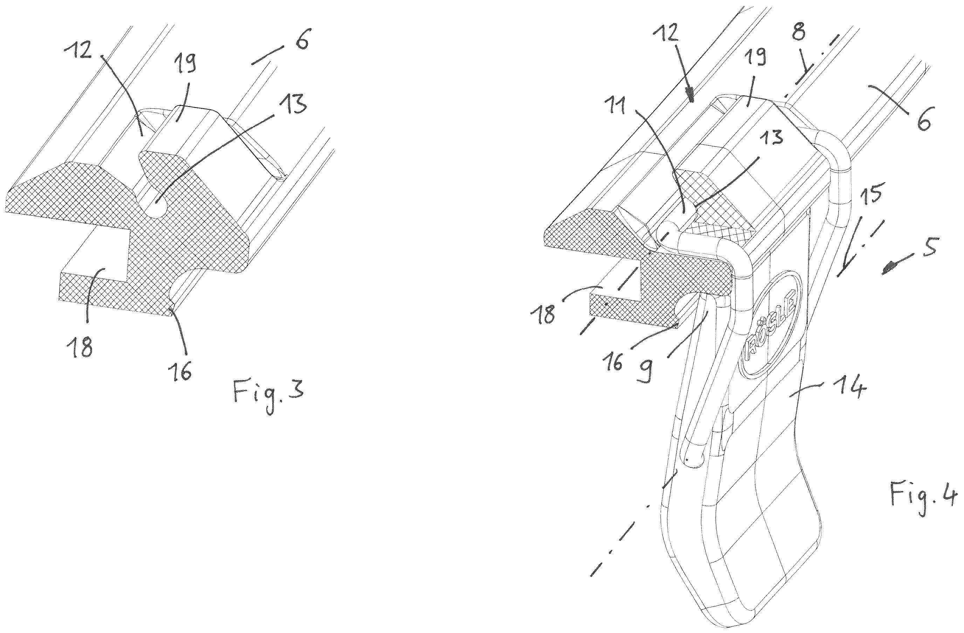

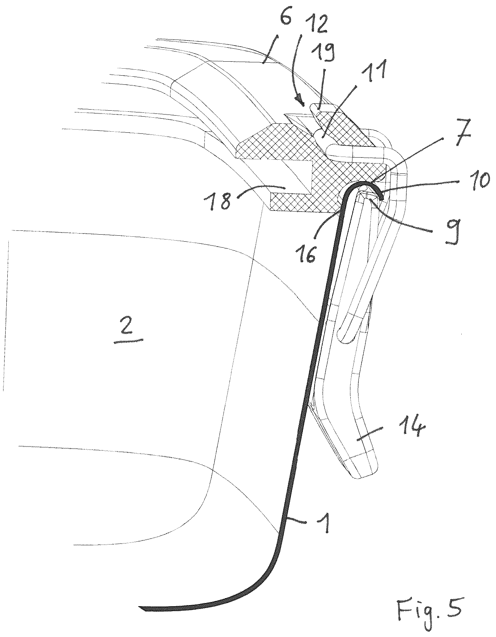

Der Deckel 4 ist mit Spannbügeln 5 im aufgesetzten Zustand auf dem Grundkörper 1 verriegelbar. Für jeden Spannbügel 5 ist in der elastischen Dichtung 6 eine Nut 12 vorgesehen, in welche jeweils ein Spannbügel 5 einclipsbar und herausnehmbar ist. Wie sich besonders aus den Figuren 2 bis 6 ergibt, wird jeder Spannbügel 5 im eingeclipsten Zustand formschlüssig in der Nut 12 gehalten, weil diese einen Hinterschnitt 13 aufweist, in welchen beziehungsweise aus welchem ein Steg 11 eines jeden Spannbügels 5 nur unter elastischer Verformung der elastischen Dichtung 6 einsetzbar und herausnehmbar ist.

Der Steg 11 bildet gemeinsam mit der elastischen Dichtung 6 beziehungsweise der Nut 12 eine erste Drehachse 8, um welche der Spannbügel 5 verdrehbar in der elastischen Dichtung 6 gehalten wird. Der Steg 11 ist an einem ersten axialen Ende des Spannbügels 5 positioniert. An einem entgegengesetzten zweiten axialen Ende trägt der Spannbügel 5 einen Griff 14, der drehbar um eine zweite Drehachse 15 ist, die parallel zur ersten Drehachse 8 verläuft. Der Griff 14 bildet ferner ein Konterelement 9 an einem ersten axialen Griffende, sodass der Spannbügel 5 mit diesem Konterelement 9 von unten gegen einen radial nach außen ragenden Vorsprung 10 des Grundkörpers 1 verspannt werden kann, insbesondere indem der Griff 14 über einen Totpunkt hinaus um die zweite Drehachse 15 verdreht wird, sodass der Griff 14 mit dem Konterelement 9 in einen festen Sitz unter den Vorsprung 10 gelangt. Der Vorsprung 10 ist im vorliegenden Ausführungsbeispiel entlang dem gesamten Umfang des Grundkörpers 1 umlaufend ausgebildet. Beispielsweise wird der Vorsprung 10 und insbesondere der Rand 7, auf welchem die elastische Dichtung 6 aufliegt, durch Umbiegen des axial oberen Endes des Grundkörpers 1 erreicht. Es ist jedoch auch ein über dem Umfang des Grundkörpers 1 unterbrochener Vorsprung 10 möglich.

Das Einclipsen des Stegs 11 in die Nut 12 kann beim Schließen des jeweiligen Spannbügels 5, das heißt beim Verspannen des Konterelements 9 gegen den Vorsprung 10 automatischen erfolgen. Hierzu muss der Steg 11 nur von oben auf die Nut 12 oder etwas radial innerhalb neben der Nut 12 auf die elastische Dichtung 6 aufgelegt werden. Wenn der Spannbügel 5 dann mit dem Konterelement 9 gegen den Vorsprung 10 gesetzt und der Griff 14 nach unten und gegen den Grundkörper 1 verschwenkt wird, wobei er sich um die Anlagefläche zwischen Konterelement 9 und Vorsprung 10 verdreht, so blockiert der Dichtungsvorsprung 19 radial außerhalb der Nut 12 ein Verrutschen des Stegs 11 radial nach außen über die Nut 12 hinaus und führt den Steg 11 in die Nut 12 hinein.

Die elastische Dichtung 6 weist eine radial nach außen gerichtete Dichtlippe 16 auf, die ebenfalls elastisch ist. Im aufgesetzten Zustand des Deckels 4 greift diese Dichtlippe 16 reibschlüssig von Innen am Grundkörper 1 an.

Im mit den Spannbügeln 5 verspannten Zustand des Deckels wird die elastische Dichtung 6 elastisch von oben gegen den Rand 7 des Grundkörpers 1 verspannt, sodass zwischen dem Rand 7 und der elastischen Dichtung eine flüssigkeitsdichte Abdichtung erreicht wird.

Der Deckelkörper 17 des Deckels 4 ist, wie sich besonders aus der Figur 6 ergibt, in eine Umfangsnut 18 in der elastischen Dichtung 6 eingesetzt und wird dort formschlüssig und insbesondere stoffschlüssig gehalten.

### Bezugszeichen

- 1: Grundkörper
- 2: Innenraum
- 3: Zugriffsöffnung
- 4: Deckel
- 5: Spannbügel
- 6: elastische Dichtung
- 7: Rand
- 8: erste Drehachse
- 9: Konterelement
- 10: Vorsprung
- 11: Steg
- 12: Nut
- 13: Hinterschnitt
- 14: Griff
- 15: zweite Drehachse
- 16: Dichtlippe
- 17: Deckelkörper
- 18: Umfangsnut
- 19: Dichtungsvorsprung

## Patentansprüche

1. Dose, insbesondere zur Aufbewahrung von Lebensmitteln, mit einem topfförmigen Grundkörper (1), der einen Innenraum (2) mit einer Zugriffsöffnung (3) umschließt;
mit einem auf den Grundkörper (1) aufsetzbaren Deckel (4), der im aufgesetzten Zustand die Zugriffsöffnung (3) verschließt und in einem abgehobenen Zustand die Zugriffsöffnung (3) freigibt, wobei der Deckel (4) mit Spannbügeln (5) im aufgesetzten Zustand am Grundkörper (1) verriegelbar ist;
**dadurch gekennzeichnet, dass**
der Deckel (4) eine umlaufende elastische Dichtung (6) zur Abdichtung gegen einen die Zugriffsöffnung (3) umschließenden Rand (7) des Grundkörpers (1) aufweist, in welcher die Spannbügel (5) formschlüssig und herausnehmbar gehalten werden.

2. Dose gemäß Anspruch 1, **dadurch gekennzeichnet, dass** die Spannbügel (5) jeweils um eine erste Drehachse (8) verschwenkbar in der elastischen Dichtung (6) gehalten werden.

3. Dose gemäß Anspruch 2, **dadurch gekennzeichnet, dass** sich die Spannbügel (5) jeweils von einem ersten axialen Ende zu einem zweiten axialen Ende erstrecken und mit dem ersten axialen Ende um die erste Drehachse (8) verdrehbar in der elastischen Dichtung (6) gehalten werden und an ihrem zweiten axialen Ende ein Konterelement (9) tragen, und der Grundkörper (1) an seinem Rand (7) einen vom Innenraum (2) weg gerichteten Vorsprung (10) aufweist, an welchem das Konterelement (9) im aufgesetzten und verriegelten Zustand des Deckels (4) angreift, um den Deckel (4) mit der elastischen Dichtung (6) gegen den Rand (7) zu verspannen.

4. Dose gemäß einem der Ansprüche 2 oder 3, **dadurch gekennzeichnet, dass** die Spannbügel (5) an ihrem ersten axialen Ende jeweils einen Steg (11), insbesondere mit kreisförmigem Querschnitt, aufweisen, der verdrehbar um die erste Drehachse (8) in einer Nut (12) in der elastischen Dichtung (6) aufgenommen ist.

5. Dose gemäß Anspruch 4, **dadurch gekennzeichnet, dass** die Nut (12) einen Hinterschnitt (13) aufweist, in dem der Steg (11) verdrehbar und formschlüssig gehalten wird, und der Steg (11) jeweils unter elastischer Verformung der elastischen Dichtung (6) in die Nut (12) einclipsbar und aus dieser herausnehmbar ist.

6. Dose gemäß einem der Ansprüche 4 oder 5, **dadurch gekennzeichnet, dass** die Nut (12) eine vom Rand des Grundkörpers (1) weg gerichtete Nutöffnung aufweist, über welche der Steg (11) in die Nut (12) einsetzbar und herausnehmbar ist.

7. Dose gemäß einem der Ansprüche 4 bis 6, **dadurch gekennzeichnet, dass** die Nut (12) auf ihrer radial äußeren Seite durch einen Dichtungsvorsprung (19) begrenzt wird, der gegenüber einer die Nut auf ihrer radial inneren Seite begrenzenden Oberfläche der elastischen Dichtung (6) vorsteht.

8. Dose gemäß einem der Ansprüche 3 bis 7, **dadurch gekennzeichnet, dass** die Spannbügel (5) an ihrem zweiten axialen Ende jeweils einen Griff (14) aufweisen, der um eine zweite Drehachse (15) verdrehbar ist, die parallel zur ersten Drehachse (8) ist, und ein erstes axiales Griffende aufweisen, welches das Konterelement (9) ausbildet und ein zweites axiales Griffende umfasst, das sich im aufgesetzten und verriegelten Zustand des Deckels (4) entlang des Grundkörpers (1) in eine Richtung weg vom Rand (7) erstreckt, insbesondere in einem spitzen Winkel zum Grundkörper (1), wobei die zweite Drehachse (15) zwischen dem ersten axialen Griffende und dem zweiten axialen Griffende positioniert ist, insbesondere zumindest im Wesentlichen in einer Mitte zwischen den beiden axialen Griffenden.

9. Dose gemäß einem der Ansprüche 1 bis 8, **dadurch gekennzeichnet, dass** die elastische Dichtung (6) eine Dichtlippe (17) aufweist, mit welcher sie im aufgesetzten Zustand des Deckels (4) radial von Innen am Grundkörper (1) dichtend angreift.

10. Dose gemäß einem der Ansprüche 1 bis 9, **dadurch gekennzeichnet, dass** der Deckel (4) im aufgesetzten Zustand mit der elastischen Dichtung (6) reibschlüssig, insbesondere mit der Dichtlippe (16), am Grundkörper (1) anliegt und in verriegeltem Zustand mit der elastischen Dichtung (6) elastisch gegen den Grundkörper (1), insbesondere flüssigkeitsdicht, verspannt ist.

11. Dose gemäß einem der Ansprüche 1 bis 10, **dadurch gekennzeichnet, dass** der Deckel (4) einen starren Deckelkörper (17), insbesondere aus Glas, Holz oder Metall, aufweist, an dessen äußeren Umfang die elastische Dichtung (6) befestigt ist, insbesondere stoffschlüssig befestigt ist.

12. Dose gemäß Anspruch 11, **dadurch gekennzeichnet, dass** die elastische Dichtung (6) eine radial innere Umfangsnut (18) aufweist, in die der Deckelkörper (17) eingesetzt ist.

13. Dose gemäß einem der Ansprüche 1 bis 12, **dadurch gekennzeichnet, dass** der Grundkörper (1) aus einem starren Material wie Glas, Holz oder Metall hergestellt ist und insbesondere frei von einer elastischen Dichtung an seinem Rand (7) ist.
